# EUROPÄISCHE PATENTSCHRIFT

(11) **EP 1 662 059 B1**
(45) Veröffentlichungstag und Bekanntmachung des Hinweises auf die Patenterteilung: **10.12.2008**
(21) Anmeldenummer: 05405503.3
(22) Anmeldetag: 01.09.2005
(51) Int. Cl.: E04B 1/82, E04F 15/20, G10K 11/168, B32B 15/04

(54) **Bodenplatte für ein Hohlbodensystem, Verfahren zur Herstellung einer solchen Bodenplatte, sowie Hohlbodensystem mit einer solchen Bodenplatte**
Floor panel for a hollow flooring system, method of production of such a floor panel and hollow flooring system comprising such a floor panel
Panneau de plancher pour un système de plancher creux, procédé de production d'un panneau de plancher et un sytème de plancher creux avec un panneau de plancher

(30) Priorität: 29.11.2004 CH 19682004
(43) Veröffentlichungstag der Anmeldung: 31.05.2006
(73) Patentinhaber: AGB Bautechnik AG, 4802 Strengelbach (CH)
(72) Erfinder: Haldemann, Michael, 4803 Vordemwald (CH)
(74) Vertreter: Ottow, Jens M.

(56) Entgegenhaltungen:
- EP-A- 0 281 419
- US-A- 4 848 514

## Beschreibung

### TECHNISCHES GEBIET

Die vorliegende Erfindung bezieht sich auf das Gebiet des Innenausbaus von Räumen. Sie betrifft eine Bodenplatte für ein Hohlbodensystem gemäss dem Oberbegriff des Anspruchs 1. Sie betrifft weiterhin ein Verfahren zum Herstellen einer solchen Bodenplatte sowie ein Hohlbodensystem mit einer solchen Bodenplatte.

### STAND DER TECHNIK

In modernen Gebäuden wie Bürohäusern, Verwaltungsbauten, Forschungslabors oder dgl. werden zur Ausbildung der Böden in den einzelnen Räumen zunehmend Hohlbodensysteme eingesetzt, bei denen in einem Abstand oberhalb eines Unterbodens (einer Betondecke oder dgl.) ein zweiter Boden (Oberboden) aufgebaut wird, der aus einer Vielzahl von einzelnen, aneinanderstossenden Bodenplatten besteht. Die (üblicherweise rechteckigen, insbesondere quadratischen) Bodenplatten liegen mit ihren Ecken jeweils auf einer Auflageplatte auf, die von einem darunter angeordneten Tragfuss parallel und mit einem vorgegebenen Abstand zum Unterboden abgestützt wird. Je vier Bodenplatten stossen mit ihren Ecken an einer Auflageplatte bzw. einem Tragfuss zusammen.

Durch den geschilderten Aufbau des Hohlbodens ergibt sich ein durchgehender Hohlraum zwischen dem Unterboden und dem aus den Bodenplatten gebildeten zweiten Boden bzw. Oberboden. Dieser Hohlraum kann vorteilhaft dazu benutzt werden, heizungs- und lüftungstechnische Kanäle und Versorgungsleitungen sowie elektrische und kommunikationstechnische Kabel und Anschlusssysteme flexibel und unsichtbar innerhalb des jeweiligen Raums zu verlegen. Entsprechend können in den Bodenplatten beispielsweise Steckdosen oder Lüftungsöffnungen vorgesehen sein.

Wenn die Bodenplatten an den Kanten stumpf aneinander stossen und sich nach unten hin leicht verjüngen, können sie einzeln wieder herausgenommen werden. Ein solches Hohlbodensystem wird dann als Doppelboden oder Doppelbodensystem bezeichnet. Da die Bodenplatten in der Regel auf den Auflageplatten der Tragfüsse lösbar aufliegen, ist bei einem solchen Doppelbodensystem auch später ohne zusätzliche Vorkehrungen der Zugang zu dem Hohlraum zwischen den beiden Böden möglich, was die flexible und veränderbare Nutzung des Raumes ermöglicht, sowie allfällige Wartungs- und Reparaturmassnahmen massgeblich erleichtert.

Wenn die Bodenplatten - z.B. durch eine Verzahnung oder eine Ausbildung mit Nut und Kamm - randseitig ineinander greifen, ist ein Herausnehmen der einzelnen Bodenplatten nicht mehr ohne weiteres möglich, so dass spezielle Zugänge zum Hohlraum vorgesehen werden müssen. Ein solches Hohlbodensystem wird dann als Trocken-Hohlraumboden bezeichnet.

Es versteht sich dabei von selbst, dass in beiden Fällen die Bodenplatten des Oberbodens eine ausreichende Tragfähigkeit aufweisen müssen, um sich im Raum bewegende Personen, auf dem Boden stehende Ausrüstungs- und Einrichtungsgegenstände oder über den Boden rollende, bewegliche Gegenstände sicher zu tragen. Diese Tragfähigkeit ist insbesondere deshalb wichtig, weil die Bodenplatten üblicherweise nur mit einem kleinen Eckbereich auf den unterstützenden Auflageplatten aufliegen und ansonsten den Raum zwischen benachbarten Tragfüssen frei überspannen. Es versteht sich auch von selbst, dass die Bodenplatten in der Regel zum Aufbringen bzw. Auflegen eines Bodenbelags wie z.B. eines Teppichbodens geeignet sein müssen.

Neben der Bedeutung für die flexible Versorgungstechnik kommt dem Hohlbodensystem aber auch in zunehmendem Masse eine Bedeutung hinsichtlich der akustischen Eigenschaften des jeweiligen Raumes (Raumakustik) zu. Werden beispielsweise die Wände und die Decke des Raumes aus architektonischen oder anderen Gründen im unverkleideten Zustand belassen (weil z.B. eine Massivdecke als Wärmespeicher für die Raumklimatisierung verwendet wird), können in dem Raum nicht die niedrigen Nachhallzeiten (von < 1 s, insbesondere etwa 0,5 s) erreicht werden, die für eine ungestörte sprachliche Verständigung und eine ausreichende raumakustische Behaglichkeit notwendig sind. In einem solchen Fall besteht der Wunsch, das Hohlbodensystem auch für die Beeinflussung der Raumakustik, insbesondere für die Absorption des Raumschalls, nutzbar zu machen.

In der Druckschrift DE-A1-197 09 142 ist im Zusammenhang mit den dortigen Figuren 17a,b bis 21 a,b bereits ein schallschluckendes Doppelbodensystem vorgeschlagen worden, bei dem (mit Ausnahme der in Fig. 21 a,b vorgestellten Lösung) zur Ausbildung einer Bodenplatte ein wannenartiger Träger (106) mit einem porösen und tragfähigen Füll- und/oder Tragmaterial (107) ausgefüllt wird.

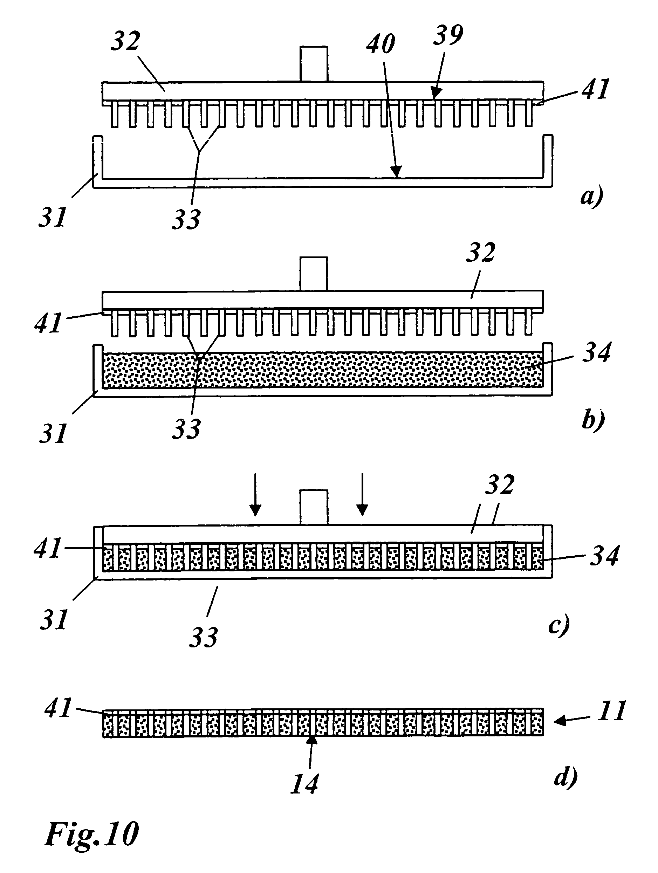

Als Füll- und/oder Tragmaterial wird ein sog. "haufwerksporiger" Beton verwendet, der mit Armiereisen (108) verstärkt werden kann. Die Trägerwanne kann im Bodenbereich mit Löchern (112) versehen sein, durch die Schall nach unten in den Hohlraum des Doppelbodens austreten kann (Fig. 18a,b). Um bei grossen Löchern ein Austreten des in die Trägerwanne eingegossenen Betons zu verhindern, kann unter dem Wannenboden ein dünnes, luftdurchlässiges Vlies (113) angebracht werden, das den Austritt des flüssigen Betons verhindert, den durch die Löcher austretenden Schall jedoch weitgehend ungehindert passieren lässt. Die Trägerwanne ist in allen Fällen vergleichsweise dünnwandig ausgeführt, so dass die Bodenlast in der Hauptsache von dem eingefüllten Beton getragen wird. Zur Erhöhung der Tragfähigkeit wird noch vorgeschlagen, in die Tragfläche (110) der Trägerwanne Profilierungen (114 in Fig. 10a,b) einzubringen, oder in den Beton ein Gitter (115, 116) einzugiessen (Fig. 20a,b). Im Falle des eingegossenen Gitters kann auf die Trägerwanne auch ganz verzichtet werden (Fig. 21a,b).

Die in der DE-A1-197 09 142 vorgeschlagene Lösung für einen schallschluckenden Doppelboden hat - insbesondere in der Praxis - die folgenden Nachteile:
- Die Herstellung der Bodenplatten ist vergleichsweise aufwändig, weil ein flüssiger Beton in eine Wanne eingefüllt wird, der dann abbinden, aushärten und austrocknen muss.
- Der flüssige Beton verlangt darüber hinaus besondere Massnahmen (Dichtungsvlies), wenn die Wanne mit einer Lochung versehen ist.
- Da die Traglast hauptsächlich von der Betonschicht aufgenommen wird, ist in vielen Fällen eine zusätzliche Armierung notwendig, die zusätzlichen Aufwand verursacht.
- Die in die Wanne eingefüllte Betonschicht ergibt von sich aus keine ausreichend glatte Oberfläche; es ist daher eine glättende Nachbehandlung notwendig, die ebenfalls erheblichen zusätzlichen Aufwand verursacht.
- Die Betonschicht in der Wanne muss zu gleicher Zeit eine tragende und eine schallschluckende Funktion erfüllen; die Tragfähigkeit und
- Schallabsorption können daher nicht getrennt optimiert werden, was zu Kompromissen führt und eine Optimierung erschwert oder sogar unmöglich macht.

Aus der US-A-4,848,514 ist ein Schalldämpfungssystem für Flugzeugtriebwerke bekannt, das mit Platten aus einem mehrschichtigen Laminat aufgebaut wird, welches auf der Oberseite ein Lochblech und darunter eine Feuchtigkeitsbarriere, eine Feuerbarriere, ein akustisch dämpfendes Material und eine Rückwand umfasst. Als tragfähige Bodenplatte eines Doppelbodens ist dieses Laminat nicht geeignet.

Aus der EP-A2-0 281 419 ist schliesslich ein Schwingboden bekannt, bei dem die oberen schwingenden Platten mit Löchern versehen sind, um im Falle von Trittschall die komprimierte Luft aus den darunter liegenden Hohlräumen austreten zu lassen. Die Konfiguration eines Schwingbodens unterscheidet sich jedoch wesentlich von der eines Doppelbodens, weil der Doppelboden einen durchgehenden, viel grösseren Hohlraum aufweist.

### DARSTELLUNG DER ERFINDUNG

Es ist daher Aufgabe der Erfindung, eine schallabsorbierende Bodenplatte für ein Doppelböden und Trockenhohlraumböden umfassendes Hohlbodensystem zu schaffen, welche die Nachteile der bekannten Bodenplatten vermeidet und insbesondere einfach aufgebaut ist, sich leicht und kostengünstig herstellen lässt und sich bezüglich der Tragfähigkeit und Schallabsorption getrennt und ohne Einschränkungen optimieren lässt. Es ist weiterhin Aufgabe der Erfindung, ein Verfahren zum Herstellen einer solchen Bodenplatte anzugeben.

Die Aufgabe wird durch die Gesamtheit der Merkmale der Ansprüche 1 und 23 gelöst. Der Kern der Erfindung besteht darin, das flächige Tragelement und die schallabsorbierenden Mittel getrennt voneinander auszubilden und so miteinander zu kombinieren, dass der Luftschall durch das Tragelement nach unten hindurchtritt und in den unter dem Tragelement angeordneten schallabsorbierenden Mitteln absorbiert bzw. geschwächt wird. Durch die getrennte Ausbildung der beiden Teile ist es möglich, das Tragelement hinsichtlich seiner Tragfähigkeit und vereinfachten Herstellbarkeit zu optimieren, während die schallabsorbierenden Mittel ihrerseits ohne Rücksicht auf Tragfähigkeitserwägungen hinsichtlich ihrer schallabsorbierenden Eigenschaften optimiert werden können.

Grundsätzlich ist es denkbar, als Tragelement einen Gitterrost zu verwenden, durch den der Schall nach unten durchtreten kann. Ein solcher Gitterrost ist jedoch nicht ohne weiteres geeignet für das Auflegen eines Bodenbelags wie z.B. eines Teppichbodens. Eine gleichmässigere Oberfläche steht dagegen zur Verfügung, wenn gemäss einer bevorzugten Ausgestaltung der Erfindung das flächige Tragelement als mit Durchgangsöffnungen versehene Tragplatte ausgebildet ist. Die Durchgangsöffnungen sind dabei vorzugsweise über die Fläche der Tragplatte in einer regelmässigen Anordnung gleichmässig verteilt, um eine gleichmässige Schalldurchlässigkeit und mechanische Belastbarkeit zu erzielen. Die Grösse der Durchgangsöffnungen wird so gewählt, dass eine gute Schalldurchlässigkeit erreicht wird, ohne dass Gleichmass der Oberfläche zu sehr zu beeinträchtigen.

Als Tragplatten kommen Platten aus unterschiedlichem Material und von unterschiedlicher Beschaffenheit in Betracht, sofern sie eine ausreichende Belastbarkeit aufweisen und günstig herzustellen sind. In einer ersten bevorzugten Weiterbildung der Erfindung wird als Tragplatte eine Metallplatte verwendet, die vorzugsweise als ein mit Löchern versehenes Metallblech, insbesondere ein Stahlblech, mit einer Blechdicke von wenigen Millimetern, vorzugsweise zwischen 2 und 5 mm, ausgebildet ist, und wobei unterhalb des Metallblechs zur Erhöhung der Tragfähigkeit Verstärkungen angebracht sind. Dies hat den Vorteil, dass ein vergleichsweise dünnes und einfaches gelochtes Blech verwendet werden kann, dessen Tragfähigkeit dann gezielt durch Verstärkungen erhöht werden kann. Die Verstärkungen umfassen vorzugsweise einen am Aussenrand des Metallblechs umlaufenden Rahmen und über die Fläche verteilt angeordnete, am Rahmen befestigte Querträger, die aus Metallrohren mit rechteckigem Querschnitt aufgebaut sind. Ein solcherart verstärktes Metallblech kann nicht nur kostengünstig und materialsparend aufgebaut werden, sondern kann hinsichtlich der Verstärkungen (Durchmesser, Verteilung in der Fläche) auch flexibel an besondere Bedingungen angepasst werden. Die Verstärkungen lassen sich darüber hinaus für andere Zwecke benutzen wie z.B. zur Halterung der schallabsorbierenden Mittel oder zur Befestigung von Bodensteckdosen oder dgl..

Gemäss einer anderen bevorzugten Weiterbildung ist die Tragplatte eine mit Durchgangsbohrungen versehene, insbesondere aus Aluminium oder einer Aluminiumlegierung bestehende, gegossene Metallplatte, die zur Erhöhung der Tragfähigkeit auf der Unterseite angegossene Verstärkungsrippen aufweist.

Derartige Druckguss-Aluminiumplatten sind bekannt und haben bei einem Rastermass von 600 x 600 mm eine relativ hohe Nennpunktlast.

Eine andere, besonders vorteilhafte Weiterbildung ist dadurch gekennzeichnet, dass die Tragplatte aus einem, insbesondere Fasern enthaltenden, Verbundmaterial besteht. Unter Platten aus einem Fasern enthaltenden Verbundmaterial werden in diesem Zusammenhang auch Holzfasern enthaltende Platten wie Pressspanplatten oder MDF-Platten verstanden. Eine sehr wirtschaftliche Lösung ergibt sich, wenn die aus dem trockenen Innenausbau bekannten Anhydritplatten, insbesondere Gipsfaserplatten, mit Durchgangsbohrungen versehen, als Tragplatten verwendet werden. Derartige Platten werden grosstechnisch hergestellt, sind sehr robust und haben eine für den weiteren Aufbau des Bodens hervorragende Oberflächenbeschaffenheit.

Es hat sich dabei bewährt, dass die Tragplatte eine Dicke von mehreren cm, insbesondere etwa 3-4 cm, aufweist, und dass die Tragplatte quadratisch ist und eine Kantenlänge von 30-140 cm, insbesondere etwa 60 cm, hat.

Die schallabsorbierenden Mittel ihrerseits umfassen vorzugsweise eine sich über die Fläche der Bodenplatte erstreckende, durchgehende schallabsorbierende Schicht, die im Fall der vergleichsweise dicken Anhydritplatte an die Unterseite des Tragelements angrenzt. Der durch die Tragplatte hindurchtretende Schall gelangt hier unmittelbar in die schallabsorbierende Schicht, ohne sich in einem Zwischenraum ausbreiten zu können.

In dieser Konfiguration kann die schallabsorbierende Schicht nach Art auf die Unterseite des Tragelements nach Art einer Beschichtung, insbesondere einer schallabsorbierenden Putzschicht, haftend aufgebracht sein.

Eine andere Möglichkeit besteht darin, dass die schallabsorbierende Schicht durch eine schallabsorbierende, insbesondere poröse, Matte oder Platte gebildet wird, die an der Unterseite des Tragelements anliegt. Derartige, aus einem Weichschaumstoff mit mineralischer Imprägnierung bestehende Matten sind als Akustikmatten bekannt und beispielsweise unter der Bezeichnung "illtec FM" von der Firma illbruck Bautechnik GmbH, Leverkusen, erhältlich.

Zur Befestigung der schallabsorbierenden Schicht am Tragelement ist vorzugsweise eine Wanne vorgesehen, welche die schallabsorbierende Schicht aufnimmt und mit dem Tragelement fest verbunden ist. Die Wanne lässt dabei an jeder Ecke des Tragelements einen Eckbereich frei, der zum Auflegen der Bodenplatte innerhalb des Doppel- bzw. Hohlraumbodens benötigt wird. Die Wanne besteht aus einem Metallblech und ist am Tragelement festgeschraubt. Sie trägt aufgrund ihrer Masse zur Absorption des tieferfrequenten Schalls bei und bewirkt eine Mehrfachreflexion des Schalls durch die schallabsorbierende Schicht.

Im Fall des aus einem Metallblech mit Verstärkungen gebildeten Tragelements ist die schallabsorbierende Schicht mit Abstand zur Unterseite des Tragelements angeordnet. Die schallabsorbierende Schicht wird hier wiederum durch eine schallabsorbierende, insbesondere poröse, Matte oder Platte gebildet und durch die Querträger der Verstärkungen auf Abstand zur Unterseite des Tragelements gehalten. Die schallabsorbierende Schicht wird in dieser Lage durch eine darunterliegende Blechplatte gesichert, die am Rahmen befestigt ist.

Die erfindungsgemässen Bodenplatten werden in einem Hohlbodensystem mit einer Mehrzahl von einzelnen Bodenplatten verwendet, welche mit den Ecken auf Tragfüssen aufliegend und an den Tragfüssen aneinanderstossend oberhalb eines Unterbodens und mit Abstand zum Unterboden einen durchgehenden zweiten Boden bilden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in mehreren Teilfiguren (Fig. 1 a-c) verschiedene Ansichten einer Bodenplatte für einen Doppelboden gemäss einem ersten bevorzugten Ausführungsbeispiel der Erfindung;
- Fig. 2: in einem vergrösserten Ausschnitt den Schnitt durch die Bodenplatte aus Fig. 1;
- Fig. 3: in mehreren Teilfiguren (Fig. 3a-c) verschiedene Ansichten einer Bodenplatte mit Nut und Kamm für einen Trocken-Hohlraumboden gemäss einem zweiten bevorzugten Ausführungsbeispiel der Erfindung;
- Fig. 4: in einem vergrösserten Ausschnitt den Schnitt durch die Bodenplatte aus Fig. 3;
- Fig. 5: in mehreren Teilfiguren (Fig. 5a-c) verschiedene Ansichten einer Bodenplatte mit Verzahnung für einen Trocken-Hohlraumboden gemäss einem dritten bevorzugten Ausführungsbeispiel der Erfindung;
- Fig. 6: in einem vergrösserten Ausschnitt den Schnitt durch die Bodenplatte aus Fig. 5;
- Fig. 7: in mehreren Teilfiguren (Fig. 7a-c) verschiedene Ansichten einer metallischen Bodenplatte für einen Doppelboden gemäss einem vierten bevorzugten Ausführungsbeispiel der Erfindung;
- Fig. 8: in einem vergrösserten Ausschnitt den Schnitt durch die Bodenplatte aus Fig. 7;
- Fig. 9: den Aufbau eines Hohlbodensystems mit einer Bodenplatte gemäss Fig. 1; und
- Fig. 10: in mehreren Teilfiguren (Fig. 10a-d) verschiedene Schritte bei der Herstellung einer mit Durchgangsbohrungen versehenen Tragplatte für eine Bodenplatte gemäss Fig. 1.

### WEGE ZUR AUSFÜHRUNG DER ERFINDUNG

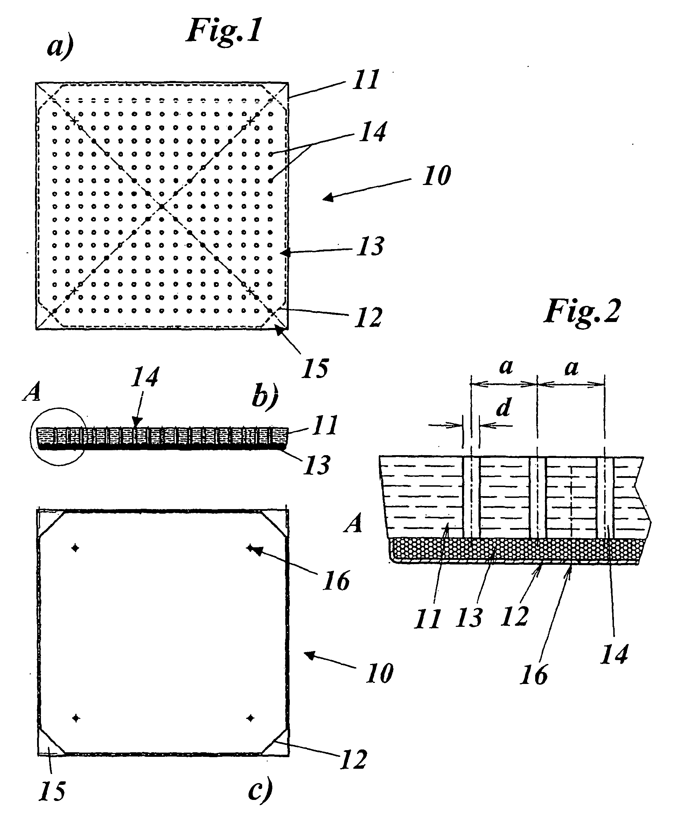

In Fig. 1 und 2 ist eine Bodenplatte gemäss einem ersten bevorzugten Ausführungsbeispiel der Erfindung in verschiedenen Ansichten dargestellt, wobei Fig. 2 den in Fig. 1b mit A bezeichneten Ausschnitt vergrössert wiedergibt. Die Bodenplatte 10 der Fig. 1 und 2 hat auf der Oberseite eine vergleichsweise dicke Tragplatte 11 in Form einer mit Durchgangsbohrungen 14 versehenen Anhydritplatte, wie sie aus dem Trockenausbau bekannt ist. Die Bodenplatte 10 wird zu den Rändern hin durch die Tragplatte 11 begrenzt, die sich nach unten zu leicht verjüngt (siehe Fig. 2). Tragplatte 11 und damit die Bodenplatte 10 sind im vorliegenden Beispiel quadratisch und haben eine Kantenlänge von 600 mm. Andere Grundformen und Kantenlängen der Tragplatte 11 sind ebenfalls denkbar. Die Dicke der Tragplatte 11 beträgt 40 mm. Im Zusammenhang mit dem faserverstärkten Plattenmaterial ergibt sich damit für die angegebene Plattengrösse eine Tragfähigkeit, die allen Anforderungen im Bodenbereich genügt. Da die Anhydritplatte bei der Herstellung einen Pressvorgang durchläuft, ist die Oberfläche sehr glatt und gleichmässig und für den weiteren Bodenaufbau mittels Bodenbelegen hervorragend geeignet. Die Bodenplatte 10 der Fig. 1, 2 ist für den Aufbau von Doppelböden vorgesehen. Die abgeschrägten Ränder der Bodenplatte 10 ermöglichen dabei ein späteres Herausnehmen einzelner Bodenplatten.

Die Durchgangsbohrungen 14 sind in einem quadratischen Raster gleichmässig über die Fläche der Tragplatte 11 verteilt angeordnet. Das Rastermass (Abstand a) beträgt im Beispiel 32 mm, kann aber bei Bedarf auch anders gewählt werden. Die Durchgangsbohrungen 14 haben im vorliegenden Fall einen Durchmesser d von 8 mm. Auch sie können mit anderen Abmessungen gewählt werden. Wichtig ist, dass der Raumschall in den wichtigen Frequenzbereichen ohne Schwierigkeiten durch die Tragplatte 11 nach unten hindurchtreten kann, um dann unterhalb der Tragplatte absorbiert zu werden. Im Beispiel der Fig. 1 sind 17 x 17 = 289 Durchgangsbohrungen 14 vorgesehen, was einem freien Querschnitt von 4 % entspricht.

Direkt an die Unterseite der Tragplatte 11 flächig angrenzend ist eine schallabsorbierende Schicht 13 angeordnet, die von einer Blechwanne 12 an der Tragplatte 11 gehalten wird. Die Blechwanne 12 besteht im Beispiel aus einem 2 mm dicken, verzinkten Blech, dass in der Nähe der Ecken jeweils ein Senkloch 16 für die Verschraubung mit der Tragplatte 11 aufweist. Die Tiefe der Blechwanne 12 ist so bemessen, dass die in der Blechwanne 12 liegende schallabsorbierende Schicht 13 mit dem Rand der Blechwanne 12 bündig abschliesst oder etwas darüber hinausragt. Auf diese Weise ist gewährleistet, dass nach der Befestigung der Blechwanne die schallabsorbierende Schicht 13 an der Tragplatte 11 anliegt und fixiert ist. Der Rand der Blechwanne 12 übernimmt dabei die Funktion eines Abstandshalters. Im vorliegenden Beispiel hat die Blechwanne 12 eine Tiefe von 10 mm. Dies entspricht der Dicke der schallabsorbierenden Schicht 13, die beispielsweise aus einer 10 mm dicken Kassetteneinlage vom Typ illtec FM/FMC1 der Firma Illbruck Bau-Technik GmbH besteht. Eine solche Kassetteneinlage ist aus einem Weichschaumstoff auf Melaminharzbasis mit einer mineralischen Imprägnierung. Der Schallabsorptionsgrad αₛ beträgt bei den Frequenzen 125/250/500/1000/2000/4000 Hz entsprechend 0,52/0,71/0,54/0,76/0,83/0,75.

Anstelle der Kassetteneinlage kann als schallabsorbierende Schicht auch ein schallabsorbierender Putz oder dgl. auf die Unterseite der Tragplatte 11 aufgebracht sein. Anstelle der Blechwanne 12 kann auch eine ebene Blechplatte verwendet werden, sofern beim Festschrauben separate Abstandshalter eingesetzt werden. Andere Befestigungsmöglichkeiten sind auch denkbar. Die Blechwanne 12 hat den besonderen Vorteil, dass sie die schallabsorbierende Schicht 13 schützt, den Schall in die schallabsorbierende Schicht 13 zurückreflektiert und gleichzeitig aufgrund ihres Gewichtes zur Dämpfung niedriger Frequenzen beiträgt.

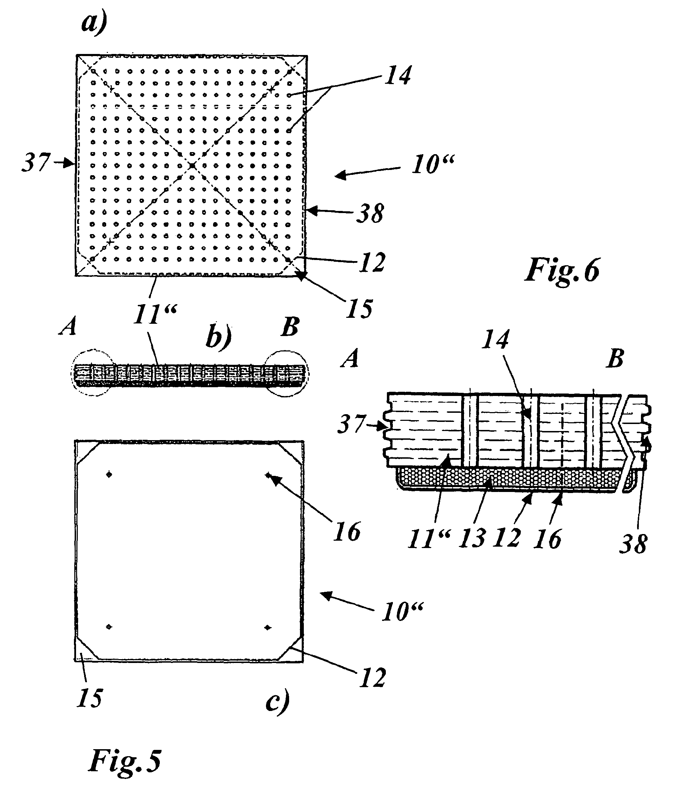

Die schallabsorbierende Schicht 13 und die Blechwanne 12 erstrecken sich über nahezu die gesamte Fläche der Tragplatte 11. Ausgespart sind gemäss Fig. 1 a nur vier dreieckförmige Eckbereiche 15, mit denen die Bodenplatte 10 bzw. die Tragplatte 11 gemäss Fig. 5 auf den Auflageplatten 29 der Tragfüsse 28 des Hohlbodensystems 26 aufliegt. Die Blechwanne 12 kann durch Biegen oder Tiefziehen hergestellt sein. Wird eine Wanne aus Kunststoff eingesetzt, können entsprechende Fertigungstechniken aus der Kunststofftechnologie angewendet werden.

Das Ausführungsbeispiel aus Fig. 1 und 2 zeichnet sich durch folgende Vorteile aus:
- Die Bodenplatte besteht - abgesehen von den Befestigungsschrauben für die Blechwanne - aus nur drei Elementen 11, 12 und 13, die sehr einfach ausgebildet sind und sich leicht (und automatisiert) verbinden lassen.
- Die Tragplatte 11 lässt sich als Anhydritplatte bzw. Gipsfaserplatte mit aus dem Trockenausbau bewährten Methoden kostengünstig und mit hoher und gleichbleibender Qualität grosstechnisch herstellen; die erforderliche Lochung kann mit einem weiter unten im Zusammenhang mit Fig. 10 beschriebenen, neuartigen Verfahren bereits während der Herstellung in die Platte eingebracht werden.
- Die Oberfläche der Tragplatte 11 ist sehr ebenmässig und ausgezeichnet geeignet für die Aufbringung der unterschiedlichsten Bodenbeläge.
- Die Kombination aus gelochter Tragplatte 11, schallabsorbierender Schicht 13 und Blechwanne 12 ergibt ein hervorragendes Schallabsorptionsverhalten des Hohlbodensystems.

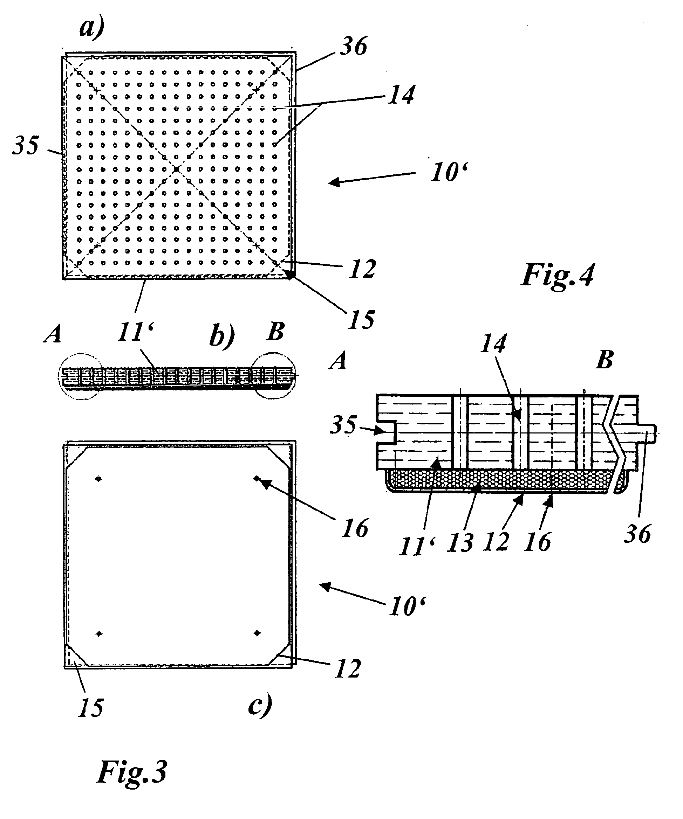

Die beiden in Fig. 3 bis 6 dargestellten Ausführungsbeispiele für eine Bodenplatte nach der Erfindung unterscheiden sich von dem in Fig. 1, 2 gezeigten Ausführungsbeispiel durch die randseitige Ausbildung der Tragplatten. Bei der Tragplatte 11' der Bodenplatte 10' aus Fig. 3, 4 sind die gegenüberliegenden Ränder mit Nut 35 und Kamm 36 versehen, so dass benachbarte Platten ineinander greifen. Es ist selbstverständlich anstelle eines Systems Nut-Kamm auch ein System Nut-Feder möglich, bei dem die Tragplatten jeweils eine umlaufende Nut aufweisen und benachbarte Platten mittels eines in die Nuten beider Platten eingreifenden Streifens (Feder) miteinander verbunden werden. Bei der Tragplatte 11" der Bodenplatte 10" aus Fig. 5, 6 sind die gegenüberliegenden Ränder mit aufeinander abgestimmten Zahnungen 37 und 38 versehen, so dass auch hier benachbarte Platten ineinander greifen. Derartige Bodenplatten 10', 10" sind zum Aufbau eines Trocken-Hohlraumbodens vorgesehen, bei dem die Bodenplatten nachträglich nicht mehr einzeln herausgenommen werden können. Die Bodenplatten 10', 10" können anstelle der quadratischen auch eine längliche, rechteckige Grundfläche haben und werden dann im Trocken-Hohlraumboden mit Längsversatz angeordnet. Die o.g. Vorteile für die Bodenplatte 10 gelten auch für die Bodenplatten 10' und 10".

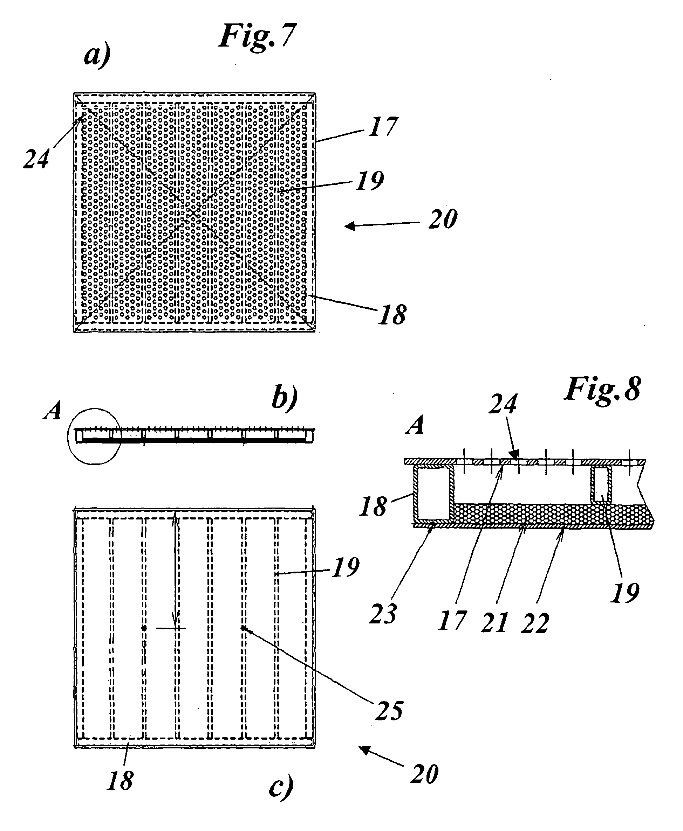

Im Rahmen der Erfindung kann aber auch ein etwas anderer Aufbau gewählt werden, der beispielhaft in Fig. 7 und 8 dargestellt ist. Hier wird bei der Bodenplatte 20 anstelle der vergleichsweise dicken Anhydritplatte als Tragplatte 17 eine gelochte Stahlplatte mit einer Dicke von 3 mm bei Aussenabmessungen von 600 x 600 mm. Die Tragplatte 17 ist auf der Unterseite mit Verstärkungen 18, 19 versehen, mit denen die Tragfähigkeit und Stabilität der Tragplatte 17 massiv erhöht werden. Die Verstärkungen umfassen einen am Rand der Tragplatte 17 umlaufenden Rahmen 18 aus Vierkantrohr und eine Mehrzahl von parallel laufenden, über die Fläche verteilt angeordneten Querträgern 19, die ebenfalls aus Vierkantrohr (oder Stabstahl), jedoch mit einer geringeren Höhe, bestehen. Die Höhen der (metallischen) Vierkantrohre des Rahmens 18 und der Querträger 19 sind so gewählt, dass ihre Differenz ungefähr der Dicke der schallabsorbierenden Schicht 21 entspricht, die innerhalb des Rahmens 18 an den Unterseiten der Querträger 19 anliegt und dadurch einen deutlichen Abstand von der Unterseite der Tragplatte 17 einhält. Als schallabsorbierende Schicht 21 können dieselben Materialien bzw. Elemente benutzt werden, die bereits im Zusammenhang mit dem Ausführungsbeispiel der Fig. 1 und 2 erwähnt worden sind.

Im Beispiel der Fig. 7 hat der Rahmen 18 eine Höhe von 30 mm. Innerhalb des Rahmens 18 sind 6 Querträger 19 angeordnet und mit dem Rahmen 18 fest verbunden (z.B. verschweisst). Rahmen 18 und Querträger 19 sind mit der Tragplatte 17 verschweisst. Die Tragplatte 17 ist mit Löchern versehen, die in den 7 Zwischenräumen zwischen den Querträgern 19 und dem Rahmen 18 angeordnet sind. Insgesamt sind 7 x 173 = 1211 Löcher vorhanden, was einem freien Querschnitt von ca. 17 % entspricht.

Die schallabsorbierende Schicht 21 wird seitlich von dem Rahmen 18 begrenzt und fixiert. Nach unten zu wird für die Begrenzung bzw. Fixierung eine verzinkte Blechplatte 22 von 2 mm Dicke eingesetzt. Die ebene Blechplatte 22 ist mit dem Rahmen 18 durch eine Klebung 23 verklebt. Zur Sicherung sind zwei Schrauben (Selbstbohrschrauben) 25 vorgesehen, die von unten durch die Blechplatte 22 und die schallabsorbierende Schicht 21 in zwei Querträger eingeschraubt sind.

Das Ausführungsbeispiel aus Fig. 7 und 8 zeichnet sich durch folgende Vorteile aus:
- Die Bodenplatte 20 setzt sich aus handelsüblichen Teilen (Blechplatten, Vierkantrohren) zusammen und kann daher günstig gefertigt werden.
- Die tragenden Teile sind alle aus Metall und sind daher robust und für besonders raue Einsatzbedingungen geeignet.

Andere geeignete Tragplatten können aus Aluguss hergestellt sein und einen angegossenen Rahmen und/oder angegossene Verstärkungsrippen aufweisen. Derartige gegossene Tragplatten bzw. Bodenplatten mit und ohne Lochung und in einem Raster von 600 x 600 mm oder 500 x 500 mm sind kommerziell erhältlich.

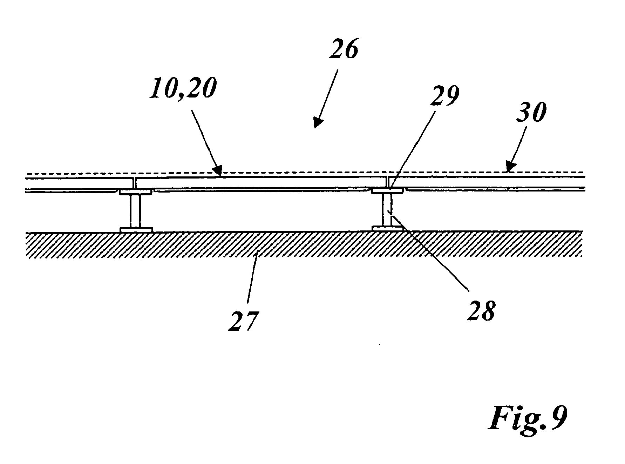

Die erfindungsgemässen Bodenplatten, von denen vier bevorzugte Ausführungsbeispiele erläutert worden sind, sind für die Anwendung in einem Hohlbodensystem gedacht, wie es stark vereinfacht in Fig. 9 wiedergegeben ist.

Das dortige Hohlbodensystem 26 ist auf einem Unterboden 27 aus Beton oder dgl. aufgebaut. Über die Fläche des Unterbodens 27 in einer regelmässigen (quadratischen) Anordnung verteilt angeordnet sind (höhenverstellbare) Tragfüsse 28 auf dem Unterboden 27 befestigt, die am oberen Ende jeweils eine Auflageplatte 29 aufweisen. Auf jede der Auflageplatten 29 sind mit den Ecken zusammenstossend jeweils vier Bodenplatten 10 bzw. 20 aufgelegt und bilden einen durchgehenden Oberboden, der bei randseitig unverbundenen Bodenplatten 10, 20 gemäss Fig. 1, 2 bzw. Fig. 7, 8 jederzeit durch Wegnahme von einer oder mehreren Bodenplatten 10, 20 den Zugang zum darunterliegenden Zwischenraum ermöglicht. Bei randseitig ineinandergreifenden Bodenplatten 10', 10" gemäss Fig. 3-6 müssen separate Vorrichtungen für den Zugang zum Hohlraum bzw. Zwischenraum vorgesehen werden. Auf den Oberboden kann schliesslich ein Fussbodenbelag 30 aufgebracht werden (in Fig. 5 gestrichelt eingezeichnet) wie z.B. ein Teppichboden oder ein anderer schalldurchlässiger Belag.

Bei den in Fig. 1 bis 6 wiedergegebenen Ausführungsbeispielen werden als Tragplatten 11, 11', 11" vorzugsweise Anhydritplatten bzw. Gipsfaserplatten verwendet. Diese Platten müssen mit einer Lochung aus gleichmässig verteilten Durchgangsbohrungen 14 versehen sein. Grundsätzlich ist es denkbar, die Durchgangsbohrungen 14 mit einem Durchmesser von z.B. 8 mm nachträglich durch Bohren in die etwa 40 mm dicke Platte einzubringen. Ein solches Vorgehen ist jedoch mit relativ viel Aufwand verbunden. Gleichzeitig kann das Bohren zu Veränderungen im Plattenmaterial führen, durch welche die Tragfähigkeit der Platte unkontrollierbar herabgesetzt wird.

Es wird daher gemäss Fig. 10 ein Verfahren zum Herstellen von gelochten Gipsfaserplatten für den Einsatz bei Bodenplatten vorgeschlagen, bei dem die Lochung bereits während der Herstellung erzeugt wird. Grundsätzlich werden bei der Herstellung von Gipsfaserplatten der Gips und die verstärkenden Zellulosefasern sowie ggf. andere, für die späteren Eigenschaften der Platte vorteilhafte Zusatzstoffe mit Wasser vermischt und als Plattenmaterial in einer Pressvorrichtung unter hohem Druck zu stabilen und geruchsneutralen Platten gepresst. Nach der Trocknung werden die Platten auf die gewünschten Formate zugeschnitten.

Das neue Herstellungsverfahren gemäss Fig. 10 basiert auf einer Pressvorrichtung, die in Fig. 10a stark vereinfacht wiedergegeben ist und eine Form 31 bzw. unteren Stempel und einen oberen Stempel 32 mit entsprechenden Pressflächen 39, 40 umfasst. Der obere Stempel 32 hat senkrecht auf der Press-oder Stempelfläche 39 stehend eine Vielzahl von Stiften 33 angeordnet. Das Verteilungsmuster der Stifte 33 entspricht dem Verteilungsmuster der Durchgangsbohrungen 14 in der späteren Tragplatte 11, 11', 11" (Fig. 1a, 3a, 5a). Der Aussendurchmesser der Stifte 33 entspricht dem Innendurchmesser der Durchgangsbohrungen 14. Die Stifte 33 sind leicht konisch ausgebildet, um das Herauslösen der Stifte 33 aus dem Plattenmaterial beim Entformen der gepressten Platte zu erleichtern. Die Stifte 33 können aber auch auf der unteren Pressfläche 40 der Form 31 angeordnet oder auf beide Pressflächen 39, 40 aufgeteilt sein. Auf der Pressfläche 39 des Stempels 32 liegt als flächiges Stützelement vorzugsweise ein gelochtes Rückhalteblech 41 lose auf, das beim späteren Herausziehen des Stempels aus der gepressten Tragplatte die Tragplatte zurückhält. Sind die Stifte dagegen auf der Pressfläche 40 der Form 31 angeordnet, liegt auf dieser Pressfläche ein (in Fig. 10 nicht gezeigtes) gelochtes Auswurfblech lose auf, mittels dessen die gepresste Tragplatte aus der Form 31 herausgehoben werden kann.

In die Pressvorrichtung 31,..,33 wird gemäss Fig. 10b zunächst als Plattenmaterial 34 das vorbereitete Gemisch aus Wasser, Gips, Zellulosefasern und allfälligen Zusatzstoffen eingefüllt. Dann wird der obere Stempel 32 in die Form 31 eingefahren und komprimiert das Plattenmaterial in der Form 31 zu einer festen Platte (Fig. 10c). Dabei verdrängen die Stifte 33 gezielt das Plattenmaterial unter Bildung von Durchgangsbohrungen 14. Nach dem Pressen der Platte wird der obere Stempel 32 herausgezogen, während die Platte mittels des Rückhalteblechs 41 zurückgehalten wird, und die Platte dann aus der Form 31 entnommen (Fig. 10d). Nachdem die aus der Form 31 herausgenommene Platte ihre Endfestigkeit erreicht hat, kann sie (ggf. nach einer weiteren Bearbeitung) als gelochte Tragplatte 11, 11', 11" in der Bodenplatte 10, 10', 10" gemäss Fig. 1 bis 6 verwendet werden.

### BEZUGSZEICHENLISTE

- 10,10',10",20: Bodenplatte
- 11,11',11",17: Tragplatte
- 12: Blechwanne
- 13,21: schallabsorbierende Schicht (z.B. Akustikmatte)
- 14: Durchgangsbohrung
- 15: Eckbereich
- 16: Senkloch
- 18: Rahmen
- 19: Querträger
- 22: Blechplatte
- 23: Klebung
- 24: Loch
- 25: Schraube (z.B. Selbstbohrschraube)
- 26: Hohlbodensystem
- 27: Unterboden
- 28: Tragfuss
- 29: Auflageplatte
- 30: Fussbodenbelag
- 31: Form
- 32: Stempel
- 33: Stift (leicht konisch)
- 34: Plattenmaterial
- 35: Nut
- 36: Kamm
- 37, 38: Zahnung
- 39,40: Pressfläche
- 41: Rückhalteblech

- a: Abstand
- d: Durchmesser

## Patentansprüche

1. Bodenplatte (10,, 10', 10", 20) für ein Hohlbodensystem (26), welche Bodenplatte mit einem flächigen Tragelement (11, 11', 11", 17) sowie Mitteln (13, 21) zur Absorption von Schall ausgestattet ist, **dadurch gekennzeichnet, dass** das flächige Tragelement (11, 11', 11", 17) schalldurchlässig ausgebildet ist, und die schallabsorbierenden Mittel (13, 21) unterhalb des flächigen Tragelements (11, 11', 11 ", 17) angeordnet sind.

2. Bodenplatte nach Anspruch 1, **dadurch gekennzeichnet, dass** das flächige Tragelement als mit Durchgangsöffnungen (14, 24) versehene Tragplatte (11, 11', 11 ", 17) ausgebildet ist.

3. Bodenplatte nach Anspruch 2, **dadurch gekennzeichnet, dass** die Durchgangsöffnungen (14, 24) über die Fläche der Tragplatte (11, 11', 11", 17) in einer regelmässigen Anordnung gleichmässig verteilt sind.

4. Bodenplatte nach Anspruch 2 oder 3, **dadurch gekennzeichnet, dass** die Tragplatte (17) eine Metallplatte ist.

5. Bodenplatte nach Anspruch 4, **dadurch gekennzeichnet, dass** die Tragplatte (17) ein mit Löchern (24) versehenes Metallblech, insbesondere ein Stahlblech, mit einer Blechdicke von wenigen Millimetern, vorzugsweise zwischen 2 und 5 mm, ist, und dass unterhalb des Metallblechs zur Erhöhung der Tragfähigkeit Verstärkungen (18, 19) angebracht sind.

6. Bodenplatte nach Anspruch 5, **dadurch gekennzeichnet, dass** die Verstärkungen einen am Aussenrand des Metallblechs umlaufenden Rahmen (18) und über die Fläche verteilt angeordnete, am Rahmen befestigte Querträger (19) umfassen.

7. Bodenplatte nach Anspruch 6, **dadurch gekennzeichnet, dass** der Rahmen (18) und die Querträger (19) aus Metallrohren mit rechteckigem Querschnitt aufgebaut sind.

8. Bodenplatte nach Anspruch 4, **dadurch gekennzeichnet, dass** die Tragplatte eine mit Durchgangsbohrungen versehene, insbesondere aus Aluminium oder einer Aluminiumlegierung bestehende, gegossene Metallplatte ist.

9. Bodenplatte nach Anspruch 8, **dadurch gekennzeichnet, dass** die Tragplatte zur Erhöhung der Tragfähigkeit auf der Unterseite angegossene Verstärkungsrippen aufweist.

10. Bodenplatte nach Anspruch 2 oder 3, **dadurch gekennzeichnet, dass** die Tragplatte (11, 11', 11 ") aus einem, insbesondere Fasern enthaltenden, Verbundmaterial besteht.

11. Bodenplatte nach Anspruch 10, **dadurch gekennzeichnet, dass** die Tragplatte (11, 11', 11") als mit Durchgangsbohrungen (14) versehene Anhydritplatte, insbesondere Gipsfaserplatte, ausgebildet ist.

12. Bodenplatte nach Anspruch 11, **dadurch gekennzeichnet, dass** die Tragplatte (11, 11', 11 ") eine Dicke von mehreren cm, insbesondere etwa 3-4 cm, aufweist.

13. Bodenplatte nach Anspruch 11 oder 12, **dadurch gekennzeichnet, dass** die Tragplatte (11, 11', 11 ") quadratisch ist und eine Kantenlänge von 30-140 cm, insbesondere etwa 60 cm, aufweist.

14. Bodenplatte nach einem der Ansprüche 1 bis 13, **dadurch gekennzeichnet, dass** die schallabsorbierenden Mittel eine sich über die Fläche der Bodenplatte (10, 10', 10", 20) erstreckende, durchgehende schallabsorbierende Schicht (13, 21) umfassen.

15. Bodenplatte nach Anspruch 14, **dadurch gekennzeichnet, dass** die schallabsorbierende Schicht (13) an die Unterseite des Tragelements (11, 11', 11") angrenzt.

16. Bodenplatte nach Anspruch 15, **dadurch gekennzeichnet, dass** die schallabsorbierende Schicht auf die Unterseite des Tragelements (11, 11', 11") nach Art einer Beschichtung haftend aufgebracht ist.

17. Bodenplatte nach Anspruch 15, **dadurch gekennzeichnet, dass** die schallabsorbierende Schicht (13) durch eine schallabsorbierende, insbesondere poröse, Matte oder Platte gebildet wird, die an der Unterseite des Tragelements (11, 11', 11") anliegt.

18. Bodenplatte nach Anspruch 17, **dadurch gekennzeichnet, dass** zur Befestigung der schattabsorbierenden Schicht (13) am Tragelement (11, 11', 11") eine Wanne (12) vorgesehen ist, welche die schallabsorbierende Schicht (13) aufnimmt und mit dem Tragelement (11, 11', 11") fest verbunden ist, und dass die Wanne (12) an jeder Ecke des Tragelements (11, 11', 11") einen Eckbereich (15) frei lässt, der zum Auflegen der Bodenplatte (10, 10', 10") innerhalb des Doppel- bzw. Hohlraumbodens benötigt wird.

19. Bodenplatte nach Anspruch 18, **dadurch gekennzeichnet, dass** die Wanne (12) aus einem Metallblech besteht und am Tragelement (11, 11', 11") festgeschraubt ist.

20. Bodenplatte nach Anspruch 14, **dadurch gekennzeichnet, dass** die schallabsorbierende Schicht (21) mit Abstand zur Unterseite des Tragelements (17) angeordnet ist.

21. Bodenplatte nach den Ansprüchen 6 und 20, **dadurch gekennzeichnet, dass** die schallabsorbierende Schicht (21) durch eine schallabsorbierende, insbesondere poröse, Matte oder Platte gebildet wird und durch die Querträger (19) auf Abstand zur Unterseite des Tragelements (17) gehalten wird.

22. Bodenplatte nach Anspruch 21, **dadurch gekennzeichnet, dass** die schallabsorbierende Schicht (21) durch eine darunterliegende Blechplatte (22) gesichert ist, die am Rahmen (18) befestigt ist.

23. Verfahren zum Herstellen einer Bodenplatte (10, 10', 10") nach Anspruch 11, bei welchem Verfahren aus einem Plattenmaterial (34) in einer Pressvorrichtung (31, 32) zwischen zwei Pressflächen (39, 40) die Tragplatte (11, 11', 11 ") gepresst wird, **dadurch gekennzeichnet, dass** in der Pressvorrichtung (31, 32) wenigstens eine der Pressflächen (39, 40) mit einer Vielzahl von parallelen, senkrecht zur Pressfläche orientierten und aus der Pressfläche herausstehenden Stiften (33) verwendet wird, welche beim Pressen in der Tragplatte (11, 11', 11") entsprechende Durchgangsbohrungen (14) erzeugen.

24. Verfahren nach Anspruch 23, **dadurch gekennzeichnet, dass** leicht konische Stifte (33) verwendet werden.

25. Verfahren nach Anspruch 23 oder 24, **dadurch gekennzeichnet, dass** die gepresste Tragplatte (11, 11', 11") beim Trennen von der mit den Stiften (33) versehenen Pressfläche (39 bzw. 40) durch eine zwischen der Tragplatte (11, 11', 11 ") und der mit den Stiften (33) versehenen Pressfläche (39 bzw. 40) angeordnetes flächiges Stützelement, insbesondere in Form eines gelochten Rückhaltebleches (41) oder eines gelochten Auswurfbleches, welches an der Tragplatte (11, 11', 11 ") anliegt, gestützt wird.

26. Hohlbodensystem (26) mit einer Mehrzahl von einzelnen Bodenplatten (10, 10', 10", 20) welche mit den Ecken auf Tragfüssen (28) aufliegend und an den Tragfüssen (28) aneinanderstossend oberhalb eines Unterbodens (27) und mit Abstand zum Unterboden (27) einen durchgehenden zweiten Boden bilden, **dadurch gekennzeichnet, dass** Bodenplatten (10, 10', 10", 20) nach einem der Ansprüche 1 bis 22 verwendet werden.

## Claims

1. Floor panel (10, 10', 10", 20) for a hollow flooring system (26), which floor panel is equipped with a planar carrying element (11, 11', 11", 17) and means (13, 21) for the absorption of sound, **characterized in that** the planar carrying element (11, 11', 11'', 17) is sound-permeable in its configuration, and the sound-absorbing means (13, 21) are arranged below the planar carrying element (11, 11', 11" , 17).

2. Floor panel according to Claim 1, **characterized in that** the planar carrying element is configured as a carrying plate (11, 11', 11", 17) provided with through-openings (14, 24).

3. Floor panel according to Claim 2, **characterized in that** the through-openings (14, 24) are distributed uniformly over the surface of the carrying plate (11, 11', 11'', 17) in a regular arrangement.

4. Floor panel according to Claim 2 or 3, **characterized in that** the carrying plate (17) is a metal plate.

5. Floor panel according to Claim 4, **characterized in that** the carrying plate (17) is a metal sheet provided with holes (24), in particular a steel sheet, having a sheet thickness of a few millimetres, preferably between 2 and 5 mm, and **in that** reinforcements (18, 19) are attached below the metal sheet to increase the load-bearing capacity.

6. Floor panel according to Claim 5, **characterized in that** the reinforcements comprise a frame (18) encircling at the outer edge of the metal sheet and transverse carriers (19) which are arranged distributed over the surface and fastened to the frame.

7. Floor panel according to Claim 6, **characterized in that** the frame (18) and the transverse carriers (19) are constructed from metal pipes having a rectangular cross section.

8. Floor panel according to Claim 4, **characterized in that** the carrying plate is a cast metal plate which is provided with through-holes and made, in particular, of aluminium or an aluminium alloy.

9. Floor panel according to Claim 8, **characterized in that** the carrying plate has reinforcing ribs cast onto the underside to increase the load-bearing capacity.

10. Floor panel according to Claim 2 or 3, **characterized in that** the carrying plate (11, 11', 11") is made of a composite material, in particular a composite material containing fibres.

11. Floor panel according to Claim 10, **characterized in that** the carrying plate (11, 11', 11") is configured as an anhydrite plate, in particular a gypsum fibreboard, provided with through-holes (14).

12. Floor panel according to Claim 11, **characterized in that** the carrying plate (11, 11', 11") has a thickness of several cm, in particular approximately 3 - 4 cm.

13. Floor panel according to Claim 11 or 12, **characterized in that** the carrying plate (11, 11', 11") is square and has an edge length of from 30 - 140 cm, in particular approximately 60 cm.

14. Floor panel according to one of Claims 1 to 13, **characterized in that** the sound-absorbing means comprise a continuous sound-absorbing layer (13, 21) extending over the surface of the base plate (10, 10', 10", 20).

15. Floor panel according to Claim 14, **characterized in that** the sound-absorbing layer (13) adjoins the underside of the carrying element (11, 11', 11").

16. Floor panel according to Claim 15, **characterized in that** the sound-absorbing layer is adhesively attached to the underside of the carrying element (11, 11', 11") in the manner of a coating.

17. Floor panel according to Claim 15, **characterized in that** the sound-absorbing layer (13) is formed by a sound-absorbing, in particular porous, mat or plate resting against the underside of the carrying element (11, 11', 11'').

18. Floor panel according to Claim 17, **characterized in that** a trough (12), which receives the sound-absorbing layer (13) and is rigidly connected to the carrying element (11, 11', 11 "), is provided for fastening the sound-absorbing layer (13) to the carrying element (11, 11', 11") and **in that** the trough (12) leaves exposed at each corner of the carrying element (11, 11', 11") a corner region (15) which is required for laying on the floor panel (10, 10', 10'') within the double or cavity floor.

19. Floor panel according to Claim 18, **characterized in that** the trough (12) consists of a metal sheet and is screwed to the carrying element (11, 11', 11").

20. Floor panel according to Claim 14, **characterized in that** the sound-absorbing layer (21) is arranged set apart from the underside of the carrying element (17).

21. Floor panel according to Claims 6 and 20, **characterized in that** the sound-absorbing layer (21) is formed by a sound-absorbing, in particular porous, mat or plate and is held apart from the underside of the carrying element (17) by the transverse carriers (19).

22. Floor panel according to Claim 21, **characterized in that** the sound-absorbing layer (21) is secured by a sheet metal plate (22) which is positioned therebelow and fastened to the frame (18).

23. Method for producing a floor panel (10, 10', 10") according to Claim 11, in which method the carrying plate (11, 11', 11") is pressed from a plate material (34) in a pressing device (31, 32) between two pressing surfaces (39, 40), **characterized in that** in the pressing device (31, 32) at least one of the pressing surfaces (39, 40) is used with a large number of parallel pins (33) which are oriented perpendicularly to the pressing surface, protrude from the pressing surface and produce corresponding through-holes (14) in the carrying plate (11, 11', 11") during pressing.

24. Method according to Claim 23, **characterized in that** slightly conical pins (33) are used.

25. Method according to Claim 23 or 24, **characterized in that** the pressed carrying plate (11, 11', 11") is supported, during separation from the pressing surface (39 or 40) provided with the pins (33), by a planar support element which is arranged between the carrying plate (11, 11', 11") and the pressing surface (39 or 40) provided with the pins (33), in particular in the form of a perforated retaining metal sheet (41) or a perforated ejection metal sheet resting against the carrying plate (11, 11', 11'').

26. Hollow flooring system (26) comprising a plurality of individual floor panels (10, 10', 10", 20) which form, resting at the corners on carrying feet (28) and abutting one another at the carrying feet (28), above a subfloor (27) and set apart from the subfloor (27) a continuous second floor, **characterized in that** floor panels (10, 10', 10", 20) according to one of Claims 1 to 22 are used.

## Revendications

1. Panneau de plancher (10, 10', 10", 20) pour un système de plancher creux (26), lequel panneau de plancher est muni d'un élément porteur plat (11, 11', 11", 17) ainsi que de moyens (13, 21) d'absorption des sons, **caractérisé en ce que** l'élément porteur plat (11, 11', 11", 17) est réalisé de manière perméable aux sons et les moyens (13, 21) d'absorption des sons sont disposés sous l'élément porteur plat (11, 11', 11", 17).

2. Panneau de plancher selon la revendication 1, **caractérisé en ce que** l'élément porteur plat est réalisé sous forme de panneau porteur (11, 11', 11", 17) pourvu d'ouvertures de passage (14, 24).

3. Panneau de plancher selon la revendication 2, **caractérisé en ce que** les ouvertures de passage (14, 24) sont réparties uniformément sur la surface du panneau porteur (11, 11', 11", 17) suivant un agencement régulier.

4. Panneau de plancher selon la revendication 2 ou 3, **caractérisé en ce que** le panneau porteur (17) est un panneau métallique.

5. Panneau de plancher selon la revendication 4, **caractérisé en ce que** le panneau porteur (17) est une tôle métallique pourvue de trous (24), en particulier une tôle d'acier, avec une épaisseur de tôle de quelques millimètres, de préférence entre 2 et 5 mm, et **en ce que** des renforcements (18, 19) sont prévus sous la tôle métallique pour augmenter la capacité de support.

6. Panneau de plancher selon la revendication 5, **caractérisé en ce que** les renforcements comprennent un cadre périphérique (18) sur le bord extérieur de la tôle métallique et des supports transversaux (19) fixés sur le cadre, répartis sur la surface.

7. Panneau de plancher selon la revendication 6, **caractérisé en ce que** le cadre (18) et les supports transversaux (19) sont construits à partir de tubes métalliques ayant une section transversale rectangulaire.

8. Panneau de plancher selon la revendication 4, **caractérisé en ce que** le panneau porteur est un panneau métallique coulé, pourvu d'alésages traversants, en particulier en aluminium ou en un alliage d'aluminium.

9. Panneau de plancher selon la revendication 8, **caractérisé en ce que** le panneau porteur présente des nervures de renforcement coulées sur le côté inférieur pour augmenter la capacité de support.

10. Panneau de plancher selon la revendication 2 ou 3, **caractérisé en ce que** le panneau porteur (11, 11', 11") se compose d'un matériau composite contenant notamment des fibres.

11. Panneau de plancher selon la revendication 10, **caractérisé en ce que** le panneau porteur (11, 11', 11") est réalisé sous forme de plaque en anhydrite, en particulier en plâtre renforcé de fibres, pourvue d'alésages traversants (14).

12. Panneau de plancher selon la revendication 11, **caractérisé en ce que** le panneau porteur (11, 11', 11") présente une épaisseur de plusieurs cm, en particulier d'environ 3 à 4 cm.

13. Panneau de plancher selon la revendication 11 ou 12, **caractérisé en ce que** le panneau porteur (11, 11', 11") est carré et présente une longueur d'arête de 30 à 140 cm, en particulier d'environ 60 cm.

14. Panneau de plancher selon l'une quelconque des revendications 1 à 13, **caractérisé en ce que** les moyens d'absorption des sons comprennent une couche (13, 21) absorbant les sons, continue, s'étendant sur la surface du panneau de plancher (10, 10', 10", 20) .

15. Panneau de plancher selon la revendication 14, **caractérisé en ce que** la couche (13) absorbant les sons est adjacente au côté inférieur de l'élément porteur (11, 11', 11").

16. Panneau de plancher selon la revendication 15, **caractérisé en ce que** la couche absorbant les sons est montée de manière adhésive sur le côté inférieur de l'élément porteur (11, 11', 11") à la manière d'un revêtement.

17. Panneau de plancher selon la revendication 15, **caractérisé en ce que** la couche (13) absorbant les sons est formée par un mat ou un panneau absorbant les sons, en particulier poreux, qui s'applique contre le côté inférieur de l'élément porteur (11, 11', 11").

18. Panneau de plancher selon la revendication 17, **caractérisé en ce que** pour la fixation de la couche (13) absorbant les sons sur l'élément porteur (11, 11', 11"), on prévoit une cuve (12) qui reçoit la couche (13) absorbant les sons et qui est connectée fixement à l'élément porteur (11, 11', 11"), et **en ce que** la cuve (12) laisse libre au niveau de chaque coin de l'élément porteur (11, 11', 11") une zone de coin (15) qui est nécessaire pour poser le panneau de plancher (10, 10', 10") à l'intérieur du double plancher ou du plancher à cavité.

19. Panneau de plancher selon la revendication 18, **caractérisé en ce que** la cuve (12) se compose d'une tôle métallique et est vissée fixement à l'élément porteur (11, 11', 11").

20. Panneau de plancher selon la revendication 14, **caractérisé en ce que** la couche (21) absorbant les sons est disposée à distance du côté inférieur de l'élément porteur (17).

21. Panneau de plancher selon les revendications 6 et 20, **caractérisé en ce que** la couche (21) absorbant les sons est formée par un mat ou un panneau absorbant les sons, en particulier poreux, et est maintenue par les supports transversaux (19) à distance du côté inférieur de l'élément porteur (17).

22. Panneau de plancher selon la revendication 21, **caractérisé en ce que** la couche (21) absorbant les sons est immobilisée par un panneau de tôle (22) sous-jacent qui est fixé au cadre (18).

23. Procédé pour fabriquer un panneau de plancher (10, 10', 10") selon la revendication 11, dans lequel on presse à partir d'un matériau de panneau (34), dans un dispositif de presse (31, 32), entre deux surfaces de presse (39, 40), le panneau porteur (11, 11', 11"), **caractérisé en ce que** dans le dispositif de presse (31, 32) on utilise au moins l'une des surfaces de presse (39, 40) avec une pluralité de broches (33) parallèles, orientées perpendiculairement à la surface de presse et saillant hors de la surface de presse, qui produisent lors du pressage des alésages traversants correspondants (14) dans le panneau porteur (11, 11', 11").

24. Procédé selon la revendication 23, **caractérisé en ce que** l'on utilise des broches (33) légèrement coniques.

25. Procédé selon la revendication 23 ou 24, **caractérisé en ce que** le panneau porteur pressé (11, 11', 11"), lors de la séparation de la surface de presse (39, respectivement 40) pourvue des broches (33), est supporté par un élément de support plan disposé entre le panneau porteur (11, 11', 11") et la surface de presse (39, respectivement 40) pourvue des broches (33), en particulier sous forme de tôle de retenue perforée (41) ou de tôle d'éjection perforée, qui s'applique contre le panneau porteur (11, 11', 11").

26. Système de plancher creux (26) comprenant une pluralité de panneaux de plancher individuels (10, 10', 10", 20) qui forment un deuxième plancher continu avec les coins en s'appuyant sur des pieds de support (28) et en butée contre les pieds de support (28) au-dessus d'un plancher inférieur (27) et à distance du plancher inférieur (27), **caractérisé en ce que** l'on utilise des panneaux de plancher (10, 10', 10", 20) selon l'une quelconque des revendications 1 à 22.
